# EUROPEAN PATENT APPLICATION

(11) **EP 4 819 109 A1**
(43) Date of publication of application: **07.10.2026**
(21) Application number: 25167559.1
(22) Date of filing: 31.03.2025
(51) Int. Cl.: G09B 23/28, G09B 23/30, G09B 23/34

(54) **MEDICAL SIMULATOR**

(71) Applicant: Svaton, Tomás, 53345 Ceperka (CZ)
(72) Inventor: Svaton, Tomás, 53345 Ceperka (CZ)
(74) Representative: Axe PI

(57) **Abstract**

A medical simulator system (100) is disclosed, featuring an imaging system (110) and a fluorescent thyroid model (120) for surgical training. Key developments include the use of silicone matrices, one or more cyanine dyes (130), tailored excitation and emission wavelengths, alternative fluorescent agents like quantum dots or rare earth element doped materials. The simulator incorporates augmented and/or virtual reality systems for collaborative training, providing haptic feedback and simulating surgical scenarios. Hygiene standards are maintained with anti-microbial properties and eco-designed materials for disposal. The model allows for positioning adjustments and features a quick-release mechanism for easy removal. It also includes physiological responses under surgical conditions and distinguishable simulated tissues, enhancing the training experience for surgical procedures.

97 words

## Description

### TECHNICAL FIELD

The present application generally relates to medical techniques, and more particularly to a medical simulator designed for training healthcare professionals.

### BACKGROUND ART

Soft-tissue surgery requires a distinction between healthy and pathological soft tissue.

This is the case, for example, when performing surgery on tissues affected by cancer. The document entitled "Fluorescence-guided surgery in cancer treatment: current status and future perspectives" by Yongchang Zheng, Huayu Yang, Henan Wang, Kai Kang, Wenkai Zhang, Gang Ma, and Shunda Du, 2019 describes such techniques.

It is important to be able to visualize the tissue to be separated from the part affected by the pathology, as well as to be able to trace the supply via the vascular system in order to preserve its functional capacity and post-procedural regeneration as much as possible.

Another example is thyroid and parathyroid gland surgery.

Known methods and systems present limitations.

### SUMMARY

A medical simulator is disclosed, featuring an imaging system and a fluorescent thyroid model for surgical training. Key developments include the use of silicone matrices, cyanine dyes, tailored excitation and emission wavelengths, and alternative fluorescent agents. The model allows for positioning adjustments and features a quick-release mechanism for easy removal. It also includes physiological responses under surgical conditions and distinguishable simulated tissues, enhancing the training experience for surgical procedures.

Embodiments or variants of the invention can be advantageous for thyroid or parathyroid (i.e. thyroidectomy/parathyroidectomy).

Beyond thyroid, embodiments or variants of the invention can be advantageous for medical applications including perfusion assessment, ureteral and urethral assessment, lymphatic mapping, hepatic and peritoneal metastases assessment along vascular, endocrine, hepatopancreaticobiliary, gynecologic, plastic, urologic, skin and colorectal surgery.

Pathologies for the thyroid are diverse: Basedow's disease, Hashimoto's thyroiditis, thyroid cancer (total or partial thyroidectomy), thyroid biopsy for nodules, hyperparathyroidism, goiter. Surgical gestures on the thyroid comprise
biopsy, total or partial thyroidectomy, partial or total parathyroidectomy.

The examples provided show a minimalistic configuration of a thyroid on a trachea, sufficient configuration to have a realistic simulator. In some embodiments, a very realistic simulator can comprise all the neck within the upper thoracic anatomy included muscles, vessels, nerves, aponeuroses, tendons, ligaments, bones and skin.

Embodiments of the invention are associated with various advantages and/or technical effects. The simulator can allow to repeat more frequently the gestures before intervention and improves the education process. The simulator can allow to lower the stress of the surgeon. The simulator can allow better immersion of formation. The simulator can allow the surgery guided assistance training. The simulator can assure better skills for surgeons. The simulator can have a positive societal impact because of a better medical care (more practitioners, better training, new surgical methods)

### BRIEF DESCRIPTION OF DRAWINGS

The present disclosure is illustrated by way of example and not limited in the accompanying figures in which like reference numerals indicate similar elements.

Embodiments of the application will now be described with reference to the attached drawings:
Figure 1 shows a fluorescent thyroid Model with veins and para-thyroidal glands for surgical training;
Figure 2 shows a fluorescent Thyroid Model for Surgical Training;
Figure 3 shows a fluorescent Thyroid Model with Trachea Attachment;
Figure 4 shows a medical Simulator with Fluorescent Thyroid Model;
Figure 5 shows a medical Simulator with Fluorescent Thyroid Model;
Figure 6 shows a medical Simulator with Fluorescent Thyroid Model;
Figure 7 shows a medical Simulator with Thyroid Model Connection Interface;
Figure 8 shows an attachment Mechanism of Trachea's Model to Keep the Thyroid;
Figure 9 shows an attachment Mechanism of the Thyroid's Model to Trachea;
Figure 10 shows a medical Simulator Support Structural View.

### DETAILED DESCRIPTION

As used herein, the term "organic dye" refers to a chemical compound that is capable of emitting light at different wavelengths.

A dye is a colored substance used to impart color to materials such as textiles, paper, leather, and other substances. Unlike pigments, dyes are soluble particles that chemically bind to the material they are applied to, ensuring the color remains vibrant and durable. Dyes selectively absorb different wavelengths of light, and the color they produce is determined by the wavelengths of light that are transmitted or reflected. Dyes are typically soluble in solvents like water, which allows them to form solutions for application. Dyes chemically bind to the material they color, which distinguishes them from pigments that do not bind chemically. Dyes consist of a chromophore, which is responsible for the color, and an auxochrome, which enhances the color.

The invention relates to a simulator for fluorescence imaging-guided surgery, specifically designed for soft-tissue surgery, including procedures involving the thyroid and parathyroid glands. The simulator enables the visualization and distinction between healthy and pathological soft tissues, facilitating surgical interventions on tissues affected by conditions such as cancer.

The simulator incorporates fluorescent parathyroid glands and their feeder vessels, which are simulated anatomical structures placed on the thyroid gland. These structures are excited by Near Infra-Red (NIR) light, specifically within the wavelength range of 680 to 800 nm, and reemit fluorescence at higher wavelengths between 800 and 900 nm. The fluorescent behavior is achieved using Indocyanine Green (ICG), a cyanine dye advantageous for its near-infrared fluorescent properties.

The development of the fluorescent component of the simulator involved several observations regarding the integration of the cyanine dye into the silicone material used for the simulator. Initial tests with various concentrations of ICG in different solvents revealed that a solution in ethanol integrated well with silicone, exhibiting clear fluorescence under dark conditions. However, exposure to light diminished the fluorescence, and the dye's properties degraded rapidly over time.

In contrast, a solution in water poorly integrated with silicone, resulting in negligible fluorescence. Observations indicated that droplets of ICG solution on porous materials, such as paper or wood, exhibited strong fluorescence when illuminated with infrared light, suggesting that incorporating a porous element into the silicone could enhance fluorescence retention. Hydrous magnesium phyllosilicate (commercial «talc») was identified as an effective support for the ICG solution when mixed with silicone, resulting in improved fluorescence visibility and durability over time.

Further experimentation involved mixing ICG with an aqueous solution of bovine serum albumin, which stabilized the dye and improved its longevity. This mixture, when combined with Hydrous magnesium phyllosilicate (commercial «talc») and silicone, produced a stable fluorescent response lasting several months.

The final simulator design features a thyroid model with integrated vessels and parathyroid glands, connected to a trachea and mounted on a flat support, which may be constructed from materials such as Plexiglas. The thyroid is attached to the trachea using a silicone lock mechanism, ensuring secure connection during surgical demonstrations while allowing for easy replacement of the thyroid model as needed.

The attachment mechanism consists of a convex hole in the trachea and a concave button on the thyroid, designed to facilitate a secure fit. The tapered shape of the attachment prism enhances adhesion between the silicone surfaces, ensuring stability during use. The design also incorporates conical holes drilled into the support plate to secure the trachea, with trials demonstrating that a truncated trachea provides superior stability compared to a whole oval trachea.

The simulator serves multiple purposes, including the ability to locate and distinguish different simulated soft tissues, training for surgical gestures on tissues with contrasting agents, testing of medical tools for new procedures, and public demonstrations of surgical interventions on various organs. Additionally, the eco-designed nature of the simulator allows for the replacement of spare parts, such as the thyroid gland, thereby reducing the overall carbon footprint associated with its production and use.

There is disclosed a medical simulator comprising an imaging system and a fluorescent thyroid model for surgical training.

The integration of an imaging system with a fluorescent thyroid model enhances the realism of the surgical training, providing trainees with a more accurate representation of intraoperative conditions.

The use of fluorescence in the thyroid model allows for better visualization of the anatomy during simulated surgeries, leading to improved educational outcomes for surgical trainees.

The medical simulator provides the advantage of being modifiable, allowing for customization to meet specific training needs and surgical scenarios.

The medical simulator provides the advantage of being manufacturable, facilitating efficient production processes and scalability for widespread use in surgical training.

The medical simulator provides the advantage of being metastable, ensuring that the fluorescent properties remain stable under various conditions, enhancing the reliability of the training experience.

The medical simulator provides the advantage of being interactive, enabling users to engage with the training system in a dynamic manner, which enhances learning outcomes.

The medical simulator provides the advantage of being performative, allowing for realistic simulations of surgical procedures that closely mimic real-life scenarios, thereby improving the effectiveness of training. The advantage is that the simulator allows the learning by repetition, which is very hard with anatomical pieces (dead bodies). The advantage of the simulator is that it is possible to generate the wished pathology.

In a development, the simulator further comprises a thyroid model comprising attached fluorescent parathyroid glands and veins. The simulator can contain pathological tissues like cancer.

The addition of attached fluorescent parathyroid glands and veins to the thyroid model facilitates the identification and differentiation of these critical structures, reducing the risk of inadvertent damage during actual surgical procedures. The vessels must be preserved to bring the blood to parathyroid glands.

The comprehensive representation of the thyroid region, including parathyroid glands and veins, in the simulator provides a more complete surgical training experience, enabling trainees to practice complex maneuvers with greater confidence.

In a development, the simulator further comprises fluorescent properties being achieved using a cyanine dye mixed with talc in a silicone matrix.

The use of a cyanine dye mixed with talc in a silicone matrix to achieve fluorescent properties ensures a durable and stable fluorescence that withstands repeated use in training scenarios.

The incorporation of talc in the silicone matrix with cyanine dye allows for a uniform distribution of the fluorescent properties, resulting in consistent and reliable visualization across the entire model.

In a development, the simulator further comprises a cyanine dye being Indocyanine Green.

The use of Indocyanine Green as the cyanine dye provides a well-established and clinically relevant fluorescence that is compatible with standard near-infrared imaging systems used in surgical settings.

Indocyanine Green is known for its high safety profile and minimal toxicity, making it an ideal choice for repeated use in a training environment without posing health risks to users.

In a development, the simulator further comprises a mixture being stabilized with an aqueous solution of bovine serum albumin.

Stabilizing the mixture with an aqueous solution of bovine serum albumin prevents the degradation of the fluorescent properties, thereby extending the useful life of the simulator.

The stabilization of the fluorescent mixture with bovine serum albumin enhances the consistency and intensity of the fluorescence, which improves the visual feedback provided to trainees during simulated surgeries.

In a development, the simulator further comprises a thyroid model being attached to a trachea using a silicone lock mechanism.

The integration of a thyroid model with a trachea using a silicone lock mechanism provides a secure and stable attachment, ensuring that the model remains in place during training exercises, which enhances the realism and educational value of the simulation.

The silicone lock mechanism allows for quick and easy interchangeability of the thyroid model, facilitating efficient transition between different training scenarios and enabling repeated use of the simulator for various educational purposes.

In a development, the simulator further comprises a silicone lock mechanism including a concave button and a convex hole configuration.

The concave button and convex hole configuration of the silicone lock mechanism offers a simple yet effective means of attachment, reducing the complexity of assembly and disassembly, which can save time and minimize the risk of damage to the simulator components.

This locking mechanism design provides tactile feedback to the user, confirming when the components are securely fastened, which enhances the user experience and ensures the reliability of the simulator during use.

The medical simulator of claim 1, arranged on a support structure made of eco-designed materials.

Utilizing eco-designed materials for the support structure of the medical simulator demonstrates a commitment to environmental sustainability, potentially reducing the carbon footprint associated with the production and disposal of the simulator.

The use of eco-designed materials may also appeal to environmentally conscious institutions and individuals, potentially increasing market acceptance and providing a competitive edge in the medical training equipment industry.

There is disclosed a method for training surgical procedures using a medical simulator, comprising providing a fluorescent thyroid model with distinguishable simulated tissues.

Providing a fluorescent thyroid model with distinguishable simulated tissues allows for enhanced visualization during training, which can improve the accuracy of surgical technique and the educational outcome for trainees.

The use of fluorescence to differentiate tissues can simulate the appearance of tissues under certain imaging modalities, preparing trainees for real-world scenarios where such technologies are employed, thereby broadening the scope of the simulator's applications.

In a development, the simulator further comprises attached parathyroid glands being configured to mimic physiological responses under surgical conditions.

The inclusion of attached parathyroid glands configured to mimic physiological responses provides a more comprehensive and realistic training experience, enabling trainees to practice identifying and preserving these critical structures during thyroid surgery.

By simulating physiological responses, the simulator can be used to demonstrate the consequences of surgical actions in real-time, reinforcing learning through immediate feedback and enhancing the trainees' decision-making skills under simulated surgical conditions.

**In** a development, the simulator further comprises talc being of a specific porosity to enhance the stability of the cyanine dye under various lighting conditions.

The inclusion of talc with specific porosity enhances the photostability of the cyanine dye, thereby maintaining its functional properties and extending the effective usage period of the simulator under various lighting conditions.

The tailored porosity of the talc powder may also contribute to a controlled release of the cyanine dye, providing a consistent and predictable simulation experience over time.

In a development, the simulator further comprises indocyanine Green concentration being optimized to balance fluorescence intensity and duration of visibility.

Optimizing the concentration of indocyanine Green allows for a fine-tuned balance between the fluorescence intensity and the duration of visibility, ensuring that the simulator provides clear and lasting visual feedback for training purposes.

This optimization can lead to more efficient use of the dye, potentially reducing the amount required for effective simulation and lowering the overall cost of the simulator.

In a development, the simulator further comprises an aqueous solution of bovine serum albumin being enhanced with additional stabilizing agents to increase the shelf-life of the simulator.

The enhancement of the bovine serum albumin aqueous solution with additional stabilizing agents increases the shelf-life of the simulator, reducing the frequency of replacement and providing long-term reliability for users.

Improved stability of the simulator solution can lead to more consistent performance characteristics, ensuring that training conditions remain uniform over extended periods. The simulator may be repeatedly used due to lasting properties.

In a development, the simulator further comprises a silicone lock mechanism further including a quick-release feature for easy removal and attachment during training.

The silicone lock mechanism with a quick-release feature allows for rapid and effortless removal and attachment of the simulator components, facilitating ease of use and reducing setup time during training sessions.

This feature enhances the versatility of the simulator, as it can be quickly adapted to various training scenarios or replaced with different components as needed without the use of additional tools.

This design may also increase the mechanical stability of the connection between components, reducing the likelihood of misalignment or accidental detachment during use.

In a development, the simulator further comprises eco-designed materials being chosen for their biodegradability to minimize environmental footprint after disposal.

The use of eco-designed materials enhances the environmental sustainability of the simulator by ensuring that the components can be broken down naturally, thereby reducing landfill waste.

The biodegradability of the materials contributes to a reduced ecological impact, as it allows for easier disposal and potential composting, aligning with green initiatives and eco-friendly practices.

In a development, the simulator further comprises a silicone matrix including anti-microbial properties to maintain hygiene standards during repeated use.

The incorporation of anti-microbial properties within the silicone matrix significantly reduces the risk of bacterial and fungal contamination, ensuring a safer training environment for users. No skin irritability and no endocrine impact

The hygienic features of the silicone matrix minimize the need for frequent sterilization, thereby extending the lifespan of the simulator and reducing maintenance costs.

In a development, the simulator further comprises a simulator including a built-in light source to simulate Near Infra-Red (NIR) excitation light for fluorescence activation.

The built-in light source for NIR excitation light enables the simulator to provide realistic fluorescence imaging scenarios, enhancing the educational value for medical professionals training in fluorescence-guided surgery.

The integration of NIR light capabilities allows for a more compact and self-contained simulator, eliminating the need for external light sources and simplifying the setup process for users.

In a development, the simulator further comprises a fluorescent thyroid model being designed to be interchangeable with other organ models to simulate various surgical scenarios.

The design of an interchangeable fluorescent thyroid model increases the versatility of the simulator, allowing for a broader range of surgical scenarios and educational applications.

The ability to swap out organ models enhances the cost-effectiveness of the simulator by negating the need for multiple specialized simulators, thereby saving space and resources for training facilities.

In a development, the simulator further comprises one or more augmented reality devices configured to display surgery gestures.

The inclusion of augmented reality devices provides an immersive training experience, enabling users to visualize and practice surgery gestures in a controlled, virtual environment.

The use of augmented reality technology facilitates the integration of real-time feedback and performance analytics, which can be used to improve surgical techniques and outcomes.

In a development, the simulator further comprises one or more virtual reality devices configured to display surgery gestures.

The integration of virtual reality devices enhances the immersive experience for users, providing a more realistic and engaging training environment that closely mimics actual surgical settings.

The use of virtual reality technology facilitates the visualization of complex surgical gestures, enabling users to better understand and practice intricate procedures before performing them in real-life scenarios.

In a development, the simulator further comprises augmented reality and/or virtual reality systems tracking the user's movements and provide haptic feedback to simulate the tactile sensation of surgical procedures.

The incorporation of augmented reality and virtual reality systems with movement tracking and haptic feedback allows users to develop muscle memory and fine motor skills essential for precise surgical operations. Also the emotional feedback may be monitored.

The simulation of tactile sensations provides a more comprehensive learning experience, helping users to better anticipate the physical feel of tissues and tools during actual surgeries, thus improving their manual dexterity and confidence.

In a development, the simulator further comprises augmented reality and/or virtual reality systems being integrated to allow for both collaborative training sessions and remote expert guidance.

The integration of augmented and virtual reality systems supports collaborative training sessions, fostering teamwork and communication skills among participants, which are critical in multi-disciplinary surgical environments.

The capability for remote expert guidance enables access to specialized training and mentorship from experienced surgeons worldwide, enhancing the quality of education and potentially reducing the learning curve for complex procedures.

In a development, the simulator further comprises fluorescent properties being achieved using a quantum dot formulation mixed with talc powder in a silicone matrix as an alternative to the cyanine dye.

The use of quantum dot formulations in combination with talc powder in a silicone matrix provides a stable and durable fluorescent property, ensuring consistent visibility and performance over extended periods of use.

The alternative to cyanine dye with quantum dots may reduce the risk of photobleaching and chemical degradation, leading to a more reliable simulator for training purposes.

In a development, the simulator further comprises a fluorescent protein being utilized instead of a cyanine dye, mixed with talc powder in the silicone matrix for enhanced biocompatibility and stability.

The employment of fluorescent proteins instead of cyanine dyes offers enhanced biocompatibility, minimizing potential adverse reactions during training and making the simulator safer for repeated and prolonged use.

Some other ICG alternatives comprise fluorescein, Methylene Blue (MB), 5-ALA, or LS 301. Some more NIR devices comprise SPY (mounted), FLARE (mounted), SurgOptics (mounted), ArteMIS (mounted), HyperEye (mounted), FDPM (mounted), Fluobeam (handheld), PDE (handheld), Google System (wearable).

The stability of fluorescent proteins mixed with talc powder in the silicone matrix ensures that the simulator maintains its fluorescent properties under various conditions, providing consistent training experiences across different environments and usage frequencies.

In a development, the simulator further comprises a rare earth element doped material being employed as a fluorescent agent within the talc and silicone mixture to replace the cyanine dye, providing improved fluorescence lifespan.

The incorporation of a rare earth element doped material as a fluorescent agent provides a significantly enhanced fluorescence lifespan compared to cyanine dyes, leading to prolonged usability and reliability of the simulator in training or procedural settings.

Rare earth element doped materials exhibit superior thermal stability and resistance to photobleaching, ensuring consistent fluorescence performance under varying environmental conditions and during repeated use.

The use of rare earth elements allows for the emission of sharp spectral lines, which can improve the accuracy of fluorescence imaging and the fidelity of the simulation.

In a development, the simulator further comprises a metal-organic framework (MOF) compound being utilized as an alternative to cyanine dye, mixed with silica gel powder, for creating a customizable fluorescence emission range.

The employment of a metal-organic framework (MOF) compound enables the creation of a customizable fluorescence emission range, allowing for the simulation of a wide variety of biological tissues and their respective fluorescence properties.

MOFs can offer high quantum yields and tunable pore sizes, which may facilitate the incorporation of additional functional molecules to further enhance the simulator's fluorescence capabilities.

The structural versatility of MOFs allows for the design of compounds with specific photophysical properties, potentially reducing the need for multiple simulators and streamlining the training process.

In a development, the simulator further comprises an organic dye other than cyanine being used, mixed with talc powder in the silicone matrix to achieve tailored excitation and emission wavelengths for specific surgical applications.

The use of an organic dye other than cyanine dye enables the achievement of tailored excitation and emission wavelengths, providing the flexibility to closely match the optical properties of different tissues for various surgical applications.

Organic dyes can be selected based on their compatibility with the silicone matrix and talc powder, optimizing the stability and homogeneity of the fluorescent agent within the simulator.

By choosing from a broad range of organic dyes, the simulator can be customized to exhibit specific photostability and brightness characteristics, enhancing the visual contrast and clarity during fluorescence-guided surgical training.

There is disclosed a medical simulator system comprising an imaging system and a fluorescent thyroid model for surgical training. A medical simulator is a system used in healthcare education and training to replicate real-world medical scenarios. This allows healthcare professionals to practice, learn, and assess their skills in a safe environment without risking patient safety or the one of the practitioner. Medical simulation is used to replace in vitro training (training on cadavers) due to deontological constraints. It is not possible to train in vivo (on living subjects). In silico refers to virtual simulators and digital twins. Virtual simulators are complementary to physical ones.

In a development, the thyroid model comprises attached fluorescent parathyroid glands and veins. A thyroid model can be obtained in various ways. In an embodiment, the thyroid model comprises attached fluorescent parathyroid glands and veins. In an embodiment, preparing the thyroid and trachea comprises the step of casting silicone into molds. The molds can be printed in 3D (i.e. additive manufacturing). The thyroid (including veins and parathyroid glands) can be made of silicone with a Shore hardness of 00-10, and the trachea with a Shore hardness of 10A. The silicones can be additive silicones (for example platinum silicone rubber) with a 50%+50% ratio. The silicones can be colored with various colorants. In an embodiment, the thyroid model is made with locations for parathyroid glands. Then the trachea is made. Next, the attachment prism made beforehand is cast onto the thyroid. Parathyroid glands and veins can be attached to the thyroid. The trachea is fixed on the support. The thyroid can then be integrated. The model is then complete. Regarding the veins and parathyroid glands, they can be made from silicone mixed with silica powder and cyanine dye solution (for example indocyanine green) in water and albumin.

In a development, the medical simulator comprises fluorescent properties are obtained using a cyanine dye mixed with Hydrous magnesium phyllosilicate (commercial «talc») in a silicone matrix. The thyroid model can soak in cyanine dye for a few minutes (e.g. one or two minutes for a few grams is the order of magnitude). Cyanine dye solution and silica powder are chemically stable. Cyanines, also referred to as tetramethylindo(di)-carbocyanines are a synthetic dye family belonging to the polymethine group. Although the name derives etymologically from terms for shades of blue, the cyanine family covers the electromagnetic spectrum from near IR to UV. A list of cyanine dyes can be found at Lumtec (Photonic and Optical Device Porphyrins). Chemically, cyanines are a conjugated system between two nitrogen atoms; in each resonance structure, exactly one nitrogen atom is oxidized to an iminium. Typically, they form part of a nitrogenous heterocyclic system. As a cyanine, "Indocyanine Green" (ICG) is a cyanine dye with near-infrared fluorescent properties. The use of this cyanine dye is advantageous in the medical simulator. The molecular Formula is C43H49N2NaO6S2 (can slightly vary in different sources). The molecular weight is approximately 776.98 daltons. The appearance is dark green to blue-green solid; its solution is deep emerald-green. Regarding solubility, it is soluble in water and methanol. Regarding optical properties: it absorbs light mainly between 600 nm and 900 nm, with a peak around 780 nm, and emits fluorescence between 750 nm and 950 nm. 4. The medical simulator of claim 3, wherein the cyanine dye is Indocyanine Green. Amongst cyanine dyes, Indocyanine Green reveals to be advantageous for the medical simulator, but is not required as other cyanine dyes, or combinations thereof also can lead to workable experimental results. Variants of cyanine dyes emits excitations that can be slightly different (e.g. 3 ~500nm, 3.5 ~600nm, 5 ~650nm, 5.5 ~700nm, 7 ~800nm). In some embodiments, it can be advantageous to use a mixture of different cyanine dyes. Organic Dye Other than Cyanine: used in the silicone matrix to achieve tailored excitation and emission wavelengths for specific surgical applications. Other alternatives include: Briliant Blue Green (acronym BBG), Infracyanine green (IfCG), bromophenol blue (BPB). Other commercial products (registered trademark of their respective owners): IFluor^{®} 790, Alexa Fluor^{®} 790, IRDye^{®} 800. Ifluor 790 is a different molecule than ICG.

Cyanine dye or indocyanine Green in particular is well suited for colorectal surgery, fluorescence cholangiography, Bowel anastomotic perfusion assessment, fluorescence-guided lymphography for sentinel lymph-node identification and guided lymphadenectomy, and oncological surgery for the identification and localization of tumors and the diagnosis and treatment of peritoneal carcinosis.

Several alternatives to cyanine dye can be used: a) Quantum Dot Formulation can be used in a silicone matrix with Hydrous magnesium phyllosilicate (commercial «talc») as an alternative to cyanine dye. Nevertheless, this alternative provides less interesting results compared to the mixture of cyanine dye, albumine, Hydrous magnesium phyllosilicate (commercial «talc») and ethanol. b) Fluorescent Protein can be used: mixed with Hydrous magnesium phyllosilicate (commercial «talc») in the silicone matrix for enhanced biocompatibility and stability. c) Earth Element Doped Material can be employed as a fluorescent agent within the silica gel and silicone mixture to replace the cyanine dye, providing improved fluorescence lifespan. d) Organic Framework (MOF) Compound can be used as an alternative to cyanine dye, mixed with Hydrous magnesium phyllosilicate (commercial «talc»), for creating a customizable fluorescence emission range. e) Organic dye other than cyanine can be used in the silicone matrix to achieve tailored excitation and emission wavelengths for specific surgical applications.

In a development, the mixture is stabilized with an aqueous solution of bovine serum albumin.

In a development, the mixture comprises cyanine dye, albumine, hydrous magnesium phyllosilicate and ethanol. Hydrous magnesium phyllosilicate is commercial «talc». Mixtures of silicone with solutions of cyanine in water and ethanol, directly mixed together (silicone and solution) perform poorly in experiments, mostly because silicone does not dissolve in water. With ethanol, results were limited. Surprisingly, using a powder-based option revealed excellent results. The powder-based option comprises an ICG solution, or cyanine dye, in water and albumin, mixed with powder and silicone. Optiionally with ethanol.

Other embodiments comprise : - solution of cyan dye in a silicone solvent with silicone (mixed before vulcanization) ; this approach involves dissolving the cyan dye in a solvent compatible with silicone and then mixing it with the silicone before vulcanization ; - direct integration of cyan dye into one of the two components of silicone, followed by mixing both silicone components for vulcanization. For example, cyan dye can be integrated into the catalyst, while ensuring that there is no chemical reaction between the cyan dye and the catalyst, and that the emissive properties are preserved ; - if the solution of cyanine dye with one silicone component insufficiently works for luminescence, it can be advantageous to use a type of silicone polymer/rubber that ensures luminescence. Solvents such as water, methanol, and ethanol can help achieve fluorescent properties ; - developing a cyan dye compatible with silicone and applying it as a coating on the surface ; this approach can lead to design a dye specifically suited for compatibility with silicone, for example by mixing different dyes.

The cyanine dye can be integrated into talk and mixed with silicone to create veins and glands. The thyroid model is not soaked directly in cynanine dye.

Regarding concentrations : if the cyanine dye concentration is too low, visibility under luminescence can be poor. Conversely, if the cyanine dye concentration is too high, visibility also can disappear. There exists an optimal concentration range to achieve ideal visibility. The range of concentration of ICG with albumin is from 20 µMol to 30 µMol. We use 25 µMol, because it allows to guarantee that the fluorescent property is lasting in time. Tested concentrations vary from 2µ Mol to 25µ Mol (e.g. 2µ Mol, 5µ Mol, 10µ Mol, 25µ Mol). The concentrations 10-25 µ Mol yield very good results. A range can be 10 to 50 µ Mol. There is disclosed a medical simulator, wherein the concentration of cyanine is comprised between 10 and 50 µ Mol.

Other embodiments include : using barium sulfate (BaSO₄) with fine grain size can reveal efficient (larger grains quickly integrate aqueous solution droplets without much effort), and/or using silica powder, with fine grains that retain water droplets on the surface-almost hydrophobic in appearance can lead to efficient results (e.g. mixes well)

In a development, the thyroid model is attached to a trachea using a silicone lock mechanism.

In a development, the silicone lock mechanism includes a concave button and a convex hole configuration.

In a development, the imaging system is one or more of a Widefield Fluorescence Microscope, a Confocal Fluorescence Microscope, a Multiphoton Microscope or a Light Sheet Fluorescence Microscope. A Widefield Fluorescence Microscope illuminates the entire sample simultaneously, suitable for thin specimens. A Confocal Fluorescence Microscopy uses a laser and a pinhole to eliminate out-of-focus light, providing sharp, high-contrast images with optical sectioning. AMultiphoton Microscope employs longer-wavelength light to excite fluorophores, enabling deeper tissue imaging with reduced photobleaching. A Light Sheet Fluorescence Microscopy illuminates the sample with a thin sheet of light, ideal for fast, 3D imaging of live samples. In practice, several imaging systems can be used: Fluobeam^{®} 800 (Fluoptics, Grenoble, France - Getinge), Fluobeam^{®} LX (Fluoptics, Grenoble, France - Getinge), PTeye^{®} System (Medtronic, Dublin, Ireland - AiBiomed Corp., Carlsbad, CA, USA), PINPOINT^{®} + SPY-PHI (Stryker, Kalamazoo, Michigan, USA), IMAGE1 S^{™} RUBINA (Karl Storz, Tuttlingen, Germany), EleVision^{™} IR Platform (Medtronic, Dublin, Ireland), Pde-neo II (HAMAMATSU PHOTONICS K.K., Systems Division, Japan), Quest Spectrum^{®} (Quest Medical Imaging B.V. Middenmeer, Holland). In some embodiments, other imaging systems can be used, for example weak magnetic fields, thus MRI - magnetic resonance.

In a development, the imaging system is an imaging system for optical biopsy based on fluorescence. The intrinsic autofluorescent property of parathyroid glands is called NIRAF (Intrinsic near-infrared autofluorescence). The fluorescent property is called NIR (Near infrared).

In a development, the medical simulator is arranged on a support structure made of eco-designed materials. By design, the thyroid model can be removed after each intervention or training: in particular, it enables a longer life for the medical simulator and can reduce environmental impact (medical waste).

In a development, the attached parathyroid glands are configured to mimic physiological responses under surgical conditions.

In a development, the hydrous magnesium phyllosilicate (commercial «talc») is of a specific porosity to enhance the stability of the cyanine dye under various lighting conditions.

In a development, the cyanine concentration is optimized to balance fluorescence intensity and duration of visibility.

In a development, the aqueous solution of bovine serum albumin is enhanced with additional stabilizing agents to increase the shelf-life of the simulator.

In a development, the silicone lock mechanism further includes a quick-release feature for easy removal and attachment during training.

In a development, eco-designed materials are chosen for their biodegradability to minimize environmental footprint after disposal.

In a development, the silicone matrix includes anti-microbial properties to maintain hygiene standards during repeated use.

In a development, the simulator includes a built-in light source to simulate Near Infra-Red (NIR) excitation light for fluorescence activation. Built-in sources can be implanted or implemented into the thyroid model. The fluorescent part may indeed be placed where needed. This can be a source and/or several distinct sources. The source could range from the surface to the interior (for example imitating veins). In an embodiment, different wavelengths can be used. In real practice, infrared is used. In simulation, there are more options (for example an ultraviolet (UV) lamp can illuminate sensitive parts, and the detector is the human eye directly. In some embodiments, the medical simulator comprises elements with different sensitivities, for example ultraviolet and infrared in the same simulator. In some embodiments, the same target can be doped with elements sensitive to UV or IR.

In a development, the fluorescent thyroid model is designed to be interchangeable with other organ models to simulate various surgical scenarios.

In a development, the medical simulator further comprises one or more augmented reality devices and/or virtual reality devices configured to display surgery gestures and/or track surgical tools movements and provide haptic feedback to simulate the tactile sensation of surgical procedures and/or allow for collaborative training sessions or remote expert guidance.

In a development, fluorescent properties are achieved using a quantum dot formulation mixed with Hydrous magnesium phyllosilicate in a silicone matrix as an alternative to the cyanine dye.

In a development, a fluorescent protein is utilized instead of a cyanine dye, mixed with Hydrous magnesium phyllosilicate in the silicone matrix for enhanced biocompatibility and stability.

In a development, a rare earth element doped material is employed as a fluorescent agent within the silica gel or talc and silicone mixture to replace the cyanine dye, providing improved fluorescence lifespan.

In a development, a metal-organic framework (MOF) compound is utilized as an alternative to cyanine dye, mixed with Hydrous magnesium phyllosilicate, for creating a customizable fluorescence emission range.

In a development, an organic dye other than cyanine is used, mixed with Hydrous magnesium phyllosilicate in the silicone matrix to achieve tailored excitation and emission wavelengths for specific surgical applications. There are four physical modalities in medical imaging : electromagnetism (e.g. MRI), ultrasound (e.g. echo), X-rays (e.g. CT, fluoroscopy) and light (e.g. NIR) [reflected light from the physical envelope against X-rays that pass through]. A further modality could be the nanospace, for example by exploiting the physics of nanoparticles in conjunction with the four modalities.

In a development, the medical simulator further comprises one or more sensors for detecting the position and/or movement of surgical tools operating on the thyroid model. For example, silicon in biomaterials can be used. Silicon may be further replaced by bio-materials. The integrated circuits, may be flexible and extensible and make a part of the imitated soft tissue. Implanted integrated circuits can be used. Semi conductors can be used. Sensors can comprise MEMS sensors or the like. Sensors (or detectors) can be external (e.g. video cameras to assess and reconstruct the 3D scene, accelerometers, gyroscopes, etc) and/or internal (one ore more sensors can be implemented within the thyroid model, or the organ model, or the tissue model). In an embodiment, nano-surgery can be used. For example, intelligent nanoparticles can be used (surface or in the mass). Such nano devices can move where needed, can emit the necessary waves or energetic rays or quantums. In some developments, they can change radio-opacity, and/or echogenicity and/or fluorescence and/or magnetism based on tissue and contrast needs. The intelligent (smart) materials may react to the external signal and may also be contracted like the muscles.

In a development, the medical simulator further comprises one or more actuators. In an embodiment, microturbines or micromotors can be used to move parts of the body (e.g. fluids, collagen, tendons, muscles). Smart materials (or active materials) can used. For example, these actuators can react to excitation by activating and contracting and/or expanding (e.g. simulating the heart, muscle contractions, etc). Embedded actuators can trigger various signals for the operator (e.g. alarms, guidance to avoid certain areas, confirming contact, etc).

In a development, the medical simulator is coupled with a virtual simulator, for example for in-silico training. In-silico refers to virtual simulators and digital twins. Virtual simulators can be complementary to physical ones. A virtual simulator can comprise augmented and/or virtual reality devices or components, in particular haptic feedback. So called "xR" also can be used (hybrid between augmented reality and virtual reality, for example virtual reality with configurable display opacity). The physical (or real) medical simulator can be coupled with its digital twin. Correspondences between physical or real medical simulator on the one hand and virtual simulator on the other hand can be implemented in various ways (e.g. master-slave, peers, dynamic coupling, switch between reality and simulation, etc). In particular, the virtual simulator can be coupled with augmented reality devices (or virtual reality devices, or a combination thereof). For example, a training on specific gestures can be applied first in a virtual environment and then applied in the reality. Conversely, operations performed and recorded in the reality can be improved, guided, corrected or otherwise guided via simulation.

In a development, the thyroid model is replaced by organs or tissues or parts of one or more of bone, colorectal, ureteral, urethral, veins, arters, lymph, liver, stomach, or peritoneal metastase. For example, soft tissues can be difficult to distinguish from bone tissues under X-rays. Adding contrast agents can help detect tumors and imperfections in the bone nutrition system via the circulatory system.

In a development, ultrasound and/or X-ray techniques, components or devices are used complimentary to fluorescence. Guided surgery can combine different imaging techniques. For example, ultrasound can be used to detect operation zones, then the patient can be opened via echoguided surgery. To maintain the flow of the operation, the fluorescence-guided surgery tool can be taken over, as ultrasound no longer can work. To verify after closing the patient, it would be possible to use echography tools (ultrasound) again. Coupling with ultrasound is generally preferable because the X-rays is an invasive intervention to the patient who is irradiated in that way. It can also be possible to couple X-rays and NIR imaging.

In a development, the medical simulator further comprises one or more artificial intelligence models implemented in software programs or hardware circuits configured to guide surgery. Artificial intelligence models can comprise one or more of a supervised learning model (e.g. linear regression, logistic regression, decision trees, Support Vector Machines, K-Nearest Neighbors), an unsupervised learning model (e.g. clustering algorithms, dimensionality reduction), a reinforcement learning model (e.g. Q-Learning, deep Q networks, policy gradient methods), a deep learning model (e.g. deep neural networks, convolutional neural networks, recurrent neural networks, long Short-Term memory networks), a natural language processing (NLP) model (e.g. Large Language Model, Small Language Model, transformer model, generative AI Model (e.g. generative adversarial network, variational autoencoder, diffusion model), other specialized model (e.g. expert system, fuzzy logic system, evolutionary algorithms) or an AI agent (e.g. planification and reasoning). These artificial intelligence models can be implemented in software programs and/or hardware circuits. They can be configured to guide surgery, manage display in augmented and/or virtual reality systems, or otherwise train practionners.

In a development, the thyroid model is obtained by additive manufacturing according to the customized anatomy of a given patient determined by medical imaging.

In a development, the mixture is done in this way : a) prepare ICG solution by desired concentration 2, 5, 10, 25 µMol stabilized by albumin b) mix the platinum silicone part A + part B + colorant for silicone c) mix the silica with the ICG solution and d) mix the colored silicone with the ICG-silica mixture.

There is disclosed a method for training surgical procedures using a medical simulator, comprising: - providing a fluorescent thyroid model with distinguishable simulated tissues ; - using an imaging system to visualize the fluorescent thyroid model ; - performing simulated surgical procedures on the thyroid model. In a development, the method further comprises - attaching fluorescent parathyroid glands and veins to the thyroid model ; - obtaining fluorescent properties by mixing a cyanine dye with Hydrous magnesium phyllosilicate (commercial «talc») in a silicone matrix. In a development, the cyanine dye is Indocyanine Green. In a development, the method further comprises stabilizing the mixture with an aqueous solution of bovine serum albumin. In a development, the method further comprises- attaching the thyroid model to a trachea using a silicone lock mechanism ;- configuring the silicone lock mechanism with a concave button and convex hole configuration. In a development, the imaging system comprises one or more of:- a widefield fluorescence microscope, - a Confocal Fluorescence Microscope, - a Multiphoton Microscope, - a Light Sheet Fluorescence Microscope. In a development, the method further comprises
performing optical biopsy based on fluorescence using the imaging system. In a development, the method further comprises - arranging the medical simulator on a support structure made of eco-designed materials, - configuring the thyroid model to be removable for replacement after each intervention or training. In a development, the method further comprises configuring the attached parathyroid glands to mimic physiological responses under surgical conditions. In a development, the method further comprises - incorporating a built-in light source in the simulator
- simulating Near Infra-Red (NIR) excitation light for fluorescence activation. In a development, the method further comprises - utilizing augmented reality devices to display surgery gestures ; - employing virtual reality devices to display surgery gestures ;- tracking user movements and providing haptic feedback to simulate tactile sensations of surgical procedures. In a development, the method further comprises integrating one or more artificial intelligence models implemented in software programs or hardware circuits to guide surgery. In a development, the method further comprises obtaining the thyroid model by additive manufacturing according to customized anatomy of a given patient determined by medical imaging.

There is disclosed a medical simulator comprising an imaging system and a fluorescent thyroid model for surgical training.

In a development, the simulator further comprises a thyroid model comprising attached fluorescent parathyroid glands and veins (wherein veins comprise one or more of a nervure, or a vena, or a venous blood vessel). The thyroid model in general may contain the pathology tissues to be treated.

In a development, the simulator further comprises fluorescent properties (ability of a fluorescent dye to emit light at any time) being achieved using a cyanine dye mixed with hydrous magnesium phyllosilicate (commercial «talc») in a silicone matrix (possibly comprising anti-microbial properties, if not hypoallergenic). The silicone matter can range from polymers, caoutchoucs with epoxy and polyesters, silicones with latex, additive silicones (A+B), silicones condensable silicones.

In a development, the simulator further comprises a cyanine dye being Indocyanine Green (wherein anindocyanine green is a tricarbocyanine dye).

In a development, the mixture comprises cyanine dye, albumine, hydrous magnesium phyllosilicate, with water and/or ethanol and/or methanol. "A and/or B means": "A", "B"", and "A and B".

In a development, the simulator further comprises a cyanine dye being Indocyanine Green (wherein anindocyanine green is a tricarbocyanine dye). Indocyanine Green shows fluorescence intervals (780nm-880nm) and a peak at 830 nm. In an embodiment, the cyanine dye can be a tricarbocyanine dye (C43H47N2NaO6S2 ; 4,5-benzo-benzo-indo-tricarbocyanin or benzoindotricarbocyanin)

The concentration of 20 micro Mol is generally the most suitable for the temperature comparison. After a certain threshold in the concentration, the effect of the fluorescence signal emission is worthening.

In a development, the simulator further comprises a mixture being stabilized with an aqueous solution of bovine serum albumin (can be understood to refer to a water-based solution of the biotin in which bovine serum albumin is present). **In** some experiments, it was shown that albumine (or other substances in the solution) may cause the absorption. Using albumine allows to stabilize the effect of the fluorescence in the solution. Hence it is possible to observe fluorescence of the simulator much longer in comparison to the simple distilled water solution.

In a development, the simulator further comprises a mixture being stabilized with an aqueous solution of bovine serum albumin (can be understood to refer to a water-based solution of the biotin in which bovine serum albumin is present).

In a development, the simulator further comprises a thyroid model attached to a trachea using a silicone lock mechanism. The external pressure of the hole walls exercised on the conical (when unloaded) prism (it may be also a truncated cone) allows fastening the thyroid on the trachea. The form of the loaded prism is nearly the parallelepiped due to the external compression. Such external pressure yield in highly sufficient friction on the walls to maintain the thyroid attached when the surgical gestures exercised.

In a development, the simulator further comprises a silicone lock mechanism including a concave button (to refer to a silicone lock mechanism having a concave button configuration) and a convex hole configuration (term used to refer to a configuration of a concave button and a convex hole in order to allow movement for positioning adjustments). The concave prism on the thyroid can be inserted in the trachea's hole. The prism silicon is compressed by the wall pressure and hence high friction is obtained.

The medical simulator of claim 1, arranged on a support structure made of eco-designed materials (e.g. a biodegradable character and being chosen for their biodegradability to minimize environmental footprint after disposal). The medical simulator can reproduce all parts (larynx, trachea, esophagus, thyroid, parathyroids, great vessels, thoracic duct, cervical spine, muscles, tendons, ligaments, vertebrae's, discs, nerves, skin).

There is disclosed a method for training surgical procedures using a medical simulator, comprising providing a fluorescent thyroid model with distinguishable simulated tissues. And a distinguishable anatomic dynamics such as the blood flow, the nerve functionality, draining system, muscles, bones, skin. So when the blood flow, it will be possible to observe the propagation of the cyanine dye in different tissues on the thyroïde.

In a development, the simulator further comprises attached parathyroid glands being configured to mimic physiological responses under surgical conditions.

In a development, the simulator further comprises a hydrous magnesium phyllosilicate being of a specific porosity to enhance the stability of the cyanine dye under various lighting conditions. This allows to obtain the surface necessary to increase the exposing surface for the cyanine dye emission. This allows to keep the emitting intensity even when mixed with colored silicon. The emission capability decreases when recovered by tinted silicone.

In a development, the simulator further comprises indocyanine Green concentration being optimized to balance fluorescence intensity and duration of visibility.

In a development, the simulator further comprises an aqueous solution of bovine serum albumin being enhanced with additional stabilizing agents (substances that can increase the shelf-life of a medical simulator) to increase the shelf-life (period of time during which the medical simulator will be stored in a pharmaceutically acceptable container) of the simulator. But "in an acceptable condition" can be sufficient (for using the simulator in parallel of the intervention).

In a development, the simulator further comprises a silicone lock mechanism (or strong attachment) further including a quick-release feature for easy removal and attachment during training.

In a development, the simulator further comprises eco-designed materials being chosen for their biodegradability to minimize environmental footprint after disposal. Biodegradable, recyclable or renewable materials can be used.

In a development, the simulator further comprises a silicone matrix including anti-microbial properties to maintain hygiene standards during repeated use. The medical simulator may be used in parallel during the intervention, or close prior to the intervention, and the interventional environment will be kept clean - less infection risk.

In a development, the simulator further comprises a simulator including a built-in light source (the term built-in light source is used herein to refer to a light source which can be activated by an infra-red excitation beam) to simulate Near Infra-Red (NIR) excitation light for fluorescence activation.

In a development, the simulator further comprises a fluorescent thyroid model being designed to be interchangeable with other organ models to simulate various surgical scenarios.

In a development, the simulator further comprises one or more augmented reality devices (e.g. smart glasses, head-mounted displays, etc.) configured to display surgery gestures.

In a development, the simulator further comprises one or more virtual reality devices (e.g. smart glasses with configurable opacity, head-mounted displays, VR helmet or headset, etc.) configured to display surgery gestures. It can be possible to use only the essential parts for the physical intervention, complete the image with virtual glasses with the rest of the patient in virtual, and in addition connect the NIR lamp to the computer system to integrate the fluorescence response with the virtual projection.

In a development, the simulator further comprises augmented reality /or virtual reality systems the user's movements and provide haptic feedback to simulate the tactile sensation of surgical procedures. The monitoring of the emotions during the intervention will be crucial. This will be possible with coupling of the fMRI (functional magnetic resonance imaging) or PET (positron emission tomography) or with EEG (electroencephalograph) scanners or with facial tension revealing sensor (haptic facial mask) or with vocal characteristics or with whole body behavior observer ratings (cameras) or with ANS (autonomic nervous system) measurements. The correlation between the emotional state (stress/relaxed) and the gesture can be done in real time and it would allow to give immediate feedback and advice to the surgeon what to do.

In a development, the simulator further comprises augmented reality and/or virtual reality systems being integrated to allow for both collaborative training sessions and remote expert guidance.

In a development, the simulator further comprises fluorescent properties being achieved using a quantum dot formulation mixed with Hydrous magnesium phyllosilicate (commercial «talc») in a silicone matrix as an alternative to the cyanine dye. It can also be possible to substitute the powder and/or substitute the matrix in silicone by other materials, e.g. bio-materials.

In a development, the simulator further comprises a fluorescent protein being utilized instead of a cyanine dye, mixed with Hydrous magnesium phyllosilicate (commercial «talc») in the silicone matrix for enhanced biocompatibility and stability.

In a development, the simulator further comprises a rare earth element doped material being employed as a fluorescent agent within the silica gel and silicone mixture to replace the cyanine dye, providing improved fluorescence lifespan.

In a development, the simulator further comprises an organic dye other than cyanine being used, mixed with hydrous magnesium phyllosilicate (commercial «talc») in the silicone matrix to achieve tailored excitation and emission wavelengths for specific surgical applications.

There is disclosed a medical simulator comprising an imaging system and a fluorescent thyroid model for surgical training.

In a development, the simulator further comprises a thyroid model comprising (affixed) fluorescent parathyroid glands and blood vessels. This simulator may be more complete. The skin, muscles, blood fluid imitation and other anatomical references can be added to make the formation more immersive.

In a development, the mixture is done in this way : a) prepare ICG solution by desired concentration 2, 5, 10, 25 µMol stabilized by albumin b) mix the platinum silicone part A + part B + colorant for silicone c) mix the silica with the ICG solution and d) mix the colored silicone with the ICG-silica mixture.

There is disclosed a medical simulator arranged on a support framework made of eco-friendly materials. There is disclosed a method for training surgical interventions using a medical simulator, comprising providing a fluorescent thyroid model with distinguishable artificial tissues. In a development, the simulator further comprises affixed parathyroid glands being configured to mimic biological reactions under operative conditions. The thyroid trachea and parathyroid glands are real anatomical size. The veins can be simulated (micro veins can be approached).

In a development, the simulator further comprises a Hydrous magnesium phyllosilicate (commercial «talc») being of a designated permeability to enhance the sturdiness of the cyanine dye under various (illumination environments, that vary from UV to IR.

In a development, the simulator further comprises cyanine concentration being optimized to balance luminous intensity and persistence of visibility. In a development, the simulator further comprises an aqueous mixture of bovine serum albumin being enhanced with supplementary stabilizers to increase the durability of the simulator. Tested concentrations vary from 2µM to 25µM (2µM, 5µM, 10µM, 25µM. The concentrations 10-25µM yield very good results.

In a development, the simulator further comprises (eco-friendly materials) being chosen for their decomposability to minimize ecological impact after discarding. The thyroid can be removable to help to its renewability concept.

Eco-friendly materials can be used. When the simulators are no longer usable, they can end up being used as anatomy models, and recovered material may be used to create casting molds. Even when this is no more possible, the material may be used in another non-medical application field (film, cinema) or simply energetic recycling (burned).

In a development, the simulator further comprises a silicone composite including bacteriostatic qualities to maintain cleanliness norms during recurrent use. Especially, the silicone produced by smooth-on was tested in 2019 under the requirements of OECD 439, in accordance with the EU classification R38 and GHS category 2 requirements: tests for irritation and skin sensitization yield no evidence of causing dermal contact sensitization and was classified as a non-irritant. The silicone was controlled and no danger was observed for the contact with eyes, skin, ingestion system, inhalation system with no dangers for the health. No danger for the environment, no danger for the endocrine system. This is valuable as for the composants A and B of silicone before its vulcanization. When silicone is vulcanized, it is even more stable and therefore has even less impact on human health.

In a development, the simulator further comprises a simulator including a built-in illumination source to simulate Near Infra-Red excitation beam for fluorescence initiation. In a development, the simulator further comprises a fluorescent thyroid model being designed to be interchangeable with other anatomical replicas to simulate various surgical situations.

The replacement of one or more parts is advantageous. The client is using only the critical parts of interest. The fact of the interchangeable parts makes also the sense for eco-conception politics (renewable material) and a minimization of the impact on the environment.

In a development, the simulator further comprises one or more augmented reality apparatuses configured to display operative maneuvers (also, coupling to the haptic clothes and the emotion revealers/captors for stress level evaluation).

In a development, the simulator further comprises one or more virtual reality apparatuses configured to display operative maneuvers. In a development, the simulator further comprises augmented reality and/or virtual reality systems tracking the participant's actions and provide tactile response to simulate the physical feel of surgical operations. In a development, the simulator further comprises augmented reality and/or virtual reality systems being integrated to allow for both joint instruction sessions and distant specialist advice. The presence of the haptic cloths could even be the tool for the help to practitioner to operate, a surgery giving hints or guidance of what to do next (e.g. vocally or by electric impulses to the muscles of surgeon).

In a development, the simulator further comprises a luminescent protein being utilized instead of a cyanine dye, mixed with Hydrous magnesium phyllosilicate (commercial «talc») in the silicone composite for improved biocompatibility for enhanced compatibility and sturdiness.

In a development, the simulator further comprises a (lanthanide-doped substance) being employed as a luminescent substance within the silica gel and silicone blend to replace the cyanine dye, providing extended fluorescence duration.

Lanthanide dopped substance can be used for cancer 1) upconversion luminescence imaging (UCL) 2) X-ray computed tomography (CT) 3) MRI and 4) single-photon emission computed tomography (SPECT)

In a development, the simulator further comprises a metal-organic framework compound being utilized as an substitute to cyanine dye, mixed with hydrous magnesium phyllosilicate (commercial «talc»), for creating a modifiable fluorescence spectrum. In a development, the simulator further comprises an organic pigment other than cyanine being used, mixed with hydrous magnesium phyllosilicate (commercial «talc») in the silicone composite to achieve customized excitation and emission frequencies for particular surgical uses.

Disclosed is a medical simulator with an imaging system and a fluorescent thyroid model for surgical training. The simulator includes a thyroid model with fluorescent parathyroid glands and veins, achieved using a cyanine dye mixed with Hydrous magnesium phyllosilicate (commercial «talc») in a silicone matrix. The simulator is arranged on an eco-designed support structure. The pigment for tissues is nearly similar (thyroid, parathyroid glands and veins). The objective is to be hardly distinguishable by human eye. Hence, the need of NIR imaging to be able to operate with proper precision.

A medical simulator is disclosed, comprising an imaging system and a fluorescent thyroid model for surgical training. The simulator includes a thyroid model with attached fluorescent parathyroid glands and veins, achieved using a cyanine dye mixed with Hydrous magnesium phyllosilicate (commercial «talc») in a silicone matrix. The simulator is arranged on a support structure made of eco-designed materials. The simulator includes a silicone lock mechanism for attaching the thyroid model to a trachea. The simulator is used for training surgical procedures with distinguishable simulated tissues. Tissues can be distinguishable especially due to the NIR imaging and cyanine dye.

Disclosed is a medical simulator with an imaging system and a fluorescent thyroid model for surgical training. The simulator includes a thyroid model with attached fluorescent parathyroid glands and veins, achieved using a cyanine dye mixed with Hydrous magnesium phyllosilicate (commercial «talc») in a silicone matrix. The simulator is arranged on a support structure made of eco-designed materials. The simulator includes a silicone lock mechanism for attaching the thyroid model to a trachea. The simulator is used for training surgical procedures with distinguishable simulated tissues. The simulator includes augmented reality and/or virtual reality systems for displaying surgery gestures and providing haptic feedback.

In an embodiment, the medical simulator comprises an imaging system, a built-in light source for NIR excitation light, an interchangeable fluorescent thyroid model, and augmented reality devices that track user movements and provide haptic feedback.

The advantageous effects of this combination include enhanced realism in surgical training through the use of interchangeable models and haptic feedback, facilitating a comprehensive and tactile learning experience. Also stress reduction.

In an embodiment, the method for training surgical procedures using a medical simulator comprises providing a fluorescent thyroid model with distinguishable simulated tissues and attached parathyroid glands that mimic physiological responses, integrated with augmented reality systems for collaborative training sessions and remote expert guidance. The guidance can help with the learning experience or introduce the others surgical guided tools (e.g. assisted surgery for example).

This combination enhances the educational value by simulating physiological responses and enabling interactive learning environments with expert feedback, thereby improving the surgical skill set of trainees.

In an embodiment, the medical simulator further comprises augmented reality devices, virtual reality devices, and a fluorescent thyroid model wherein fluorescent properties are achieved using a quantum dot formulation mixed with Hydrous magnesium phyllosilicate (commercial «talc») in a silicone matrix.

The advantageous effects of this combination include the ability to provide a highly immersive and visually accurate simulation environment, with the quantum dot formulation offering precise fluorescence for improved surgical visualization.

Other comments are introduced. A known issue is that cyanine is sensible on the daylight. Hence, the simulator can be stored in the dark even with the albumin stabilizer. Rotational movement may be true in the case that the axis of rotation of the thyroidal prism is perpendicular to the axis of trachea and parallel with the plane support. The rotational movement can be very small from 0 to 10 degrees.

In an embodiment, the medical simulator is arranged on a support structure made of biodegradable, and/or recyclable and/or renewable and/or eco-designed materials.

In the figures, the same or similar features are referenced by the same reference numerals.

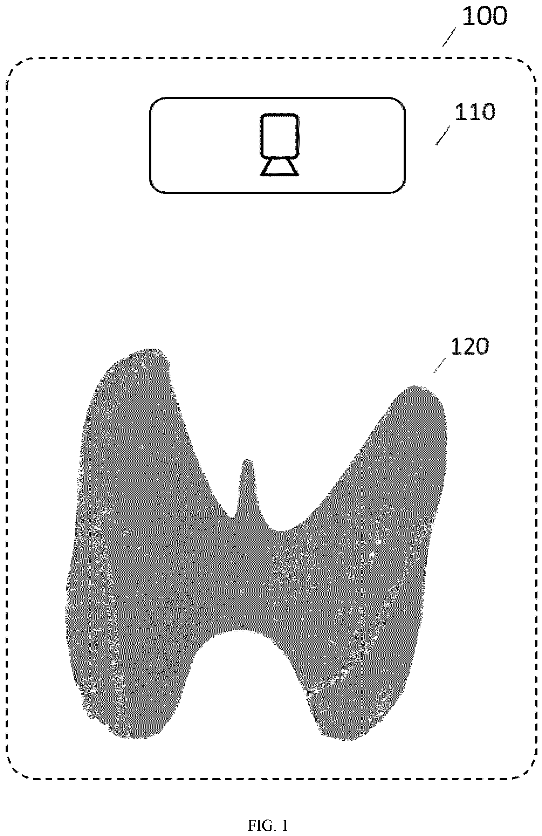

Figure 1 shows a medical simulator system (100) comprising an imaging system (110) and a fluorescent thyroid model (120) for surgical training. The fluorescent thyroid model (120) with veins and para-thyroidal glands for surgical training. Figure 1 shows the fluorescent thyroid model (120), highlighting its anatomical structure and the integration of simulated fluorescent veins. The thyroid model (120) is crafted, for example by additive manufacturing, to mimic the realistic shape and appearance of the thyroid gland, with visible lines representing the parathyroid glands and veins, which are essential for effective surgical simulation. The structure demonstrates the application of a fluorescent dye within a silicone matrix, emphasizing its use in medical training for enhanced visibility during procedures. The appearance (i.e. blood color) is non-technical, yet it is advantageous for practionners. For example, silc-pig blood PMS 7421C can be used for blood. The fluorescent thyroid model designed for surgical training. The model includes detailed representations of attached fluorescent parathyroid glands and veins. The structure is created with a silicone matrix, incorporating a cyanine dye and Hydrous magnesium phyllosilicate (commercial «talc») for fluorescence. The intricate detailing in the model helps mimic physiological responses, facilitating realistic surgical procedures. The figure shows a thyroid captured without the excitation of tissues doped with ICG.

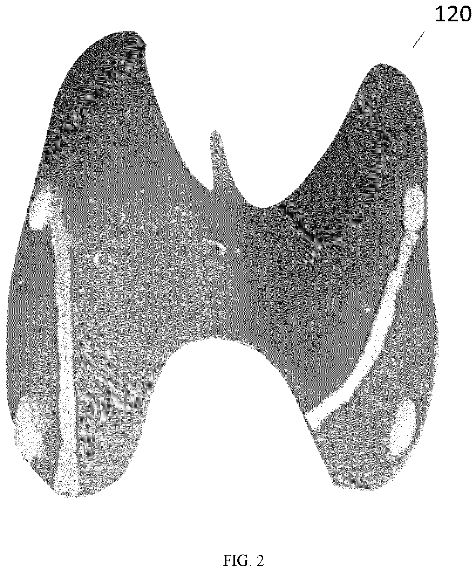

Figure 2 shows a fluorescent Thyroid Model for Surgical Training. Figure 2 shows a detailed perspective a fluorescent thyroid model designed for surgical training. The figure illustrates the anatomical structure of the thyroid with clearly defined veins and parathyroid glands. The veins and glands are visually distinct due to their enhanced fluorescent properties, intended to mimic real surgical conditions. The model is designed to provide realistic practice for surgical procedures involving the thyroid area, allowing for detailed anatomical visibility and identification during training sessions. The figure shows the state with excitation versus the state without excitation.

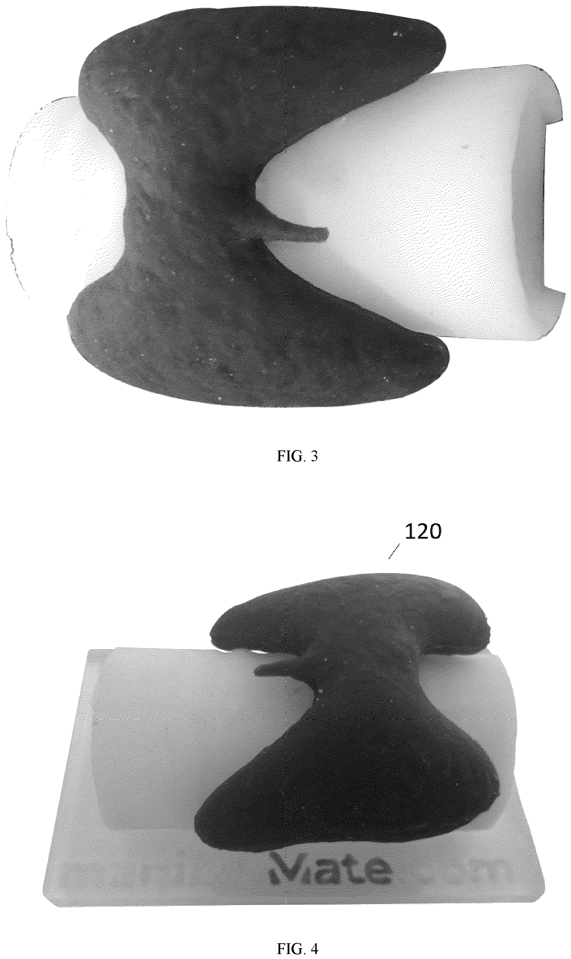

Figure 3 shows a fluorescent Thyroid Model with Trachea Attachment. Figure 3 shows a fluorescent thyroid model that is designed for surgical training purposes. The model includes a representation of the thyroid gland, which is fitted over a trachea model. The attachment is achieved using a silicone lock mechanism, depicted by the interaction between the thyroid and trachea, illustrating the concave button and convex hole configuration. This design allows for realistic simulation of surgical scenarios. **In** vivo conditions, the trachea is a hollow tube-like anatomical structure. Here, the trachea is voluntary filled and truncated in bottom to maintain better the thyroid and be more stable. **In** some embodiments, the brick attachment can be hollow also and in the cylindrical (rectangular also) longitudinal hole in the trachea it can be possible to insert the cylinder (or prism) of fixation. It should be noted that, at the medical simulator, the hollow like structure is on the extremity of the trachea.

Figure 4 shows a medical Simulator with Fluorescent Thyroid Model. Figure 4 shows a detailed perspective view of the medical simulator featuring a fluorescent thyroid model. The model is depicted in red and is secured onto a cylindrical base, representing the trachea. The setup is designed to provide realistic tactile feedback and spatial orientation for surgical training purposes, emphasizing the attachment mechanism and support structure for stability during use.

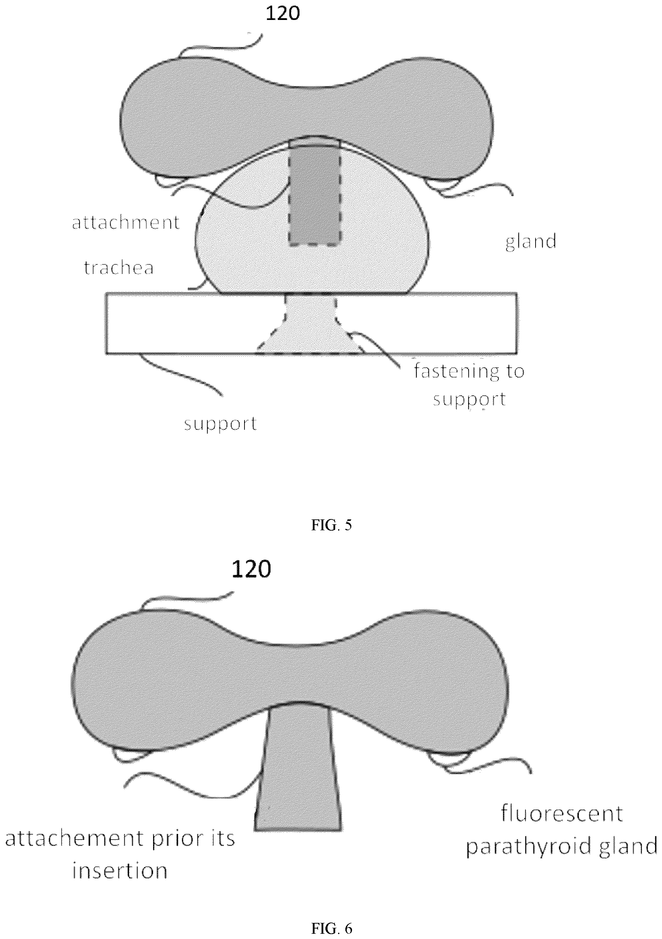

Figure 5 shows a Medical Simulator with Fluorescent Thyroid Model. Figure 5 shows a side view of a medical simulator. The figure illustrates the thyroid with attached fluorescent parathyroid glands. The thyroid model is connected to a trachea and is fastened to a support structure. The attachment mechanisms are visible, securing the model in place.

Figure 6 shows a medical Simulator with Fluorescent Thyroid Model. Figure 6 shows the structure of a medical simulator for surgical training. It includes a thyroid model depicted centrally with fluorescent parathyroid glands attached on either side. The figure illustrates an attachment prism for securing the thyroid model insertion into the trachea, which is represented as a support structure in the middle. Other attachments mechanisms are possible: glue with releasable properties, scratch or Velcro attachments, Gecko glue, bicycle light-style handlebar mounting system, hook-and-loop fasteners, metal snap fasteners, etc. The prism embodiment presents the best results, leading to advantages comprising aesthetically pleasing, quick/easy to replace, and robust. In some embodiments, a prism-based locking system (cylindrical or square) is advantageous.

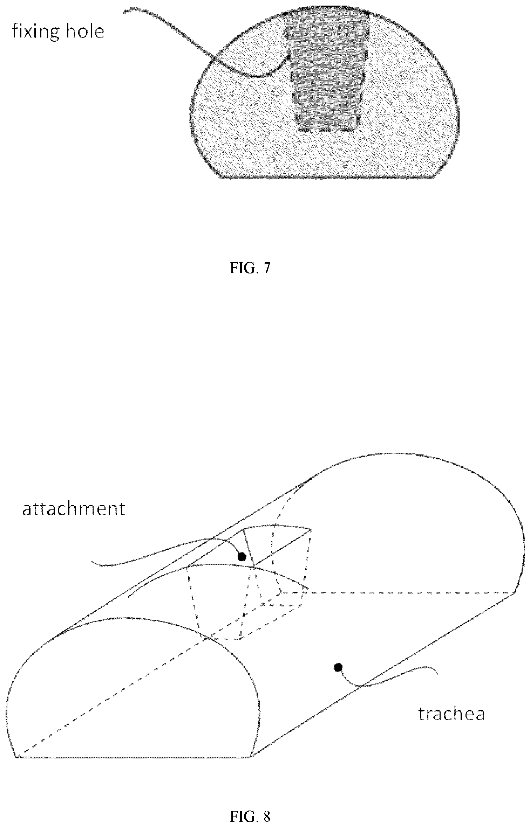

Figure 7 shows a medical Simulator with Thyroid Model Connection Interface. Figure 7 shows the fixing hole for connecting the thyroid model to the trachea within the medical simulator. The image illustrates the positioning of the fixing hole before the thyroid attachment, highlighting the interface between the thyroid model and the trachea. This connection mechanism is part of the silicone lock system that facilitates a secure attachment during surgical training scenarios. The geometry of a prism is advantageous (e.g. stability, ease of manufacturing, etc), but other geometric shapes can be advantageous, such as truncated cones or spheres to mimic large snap buttons. In another embodiment, the lock can be integrated into the thyroid, so the through-hole can be in the thyroid, and the snap button can be located on the surface of the trachea.

Figure 8 shows an attachment mechanism of trachea's model to keep the thyroid. Figure 8 shows the attachment mechanism in the trachea model to securely attach the thyroidal one using a silicone lock mechanism. The figure illustrates the configuration, including the convex hole in the trachea, which facilitates the thyroid's prism attachment. This setup is integral for maintaining the anatomical positioning of the thyroid during surgical training scenarios.

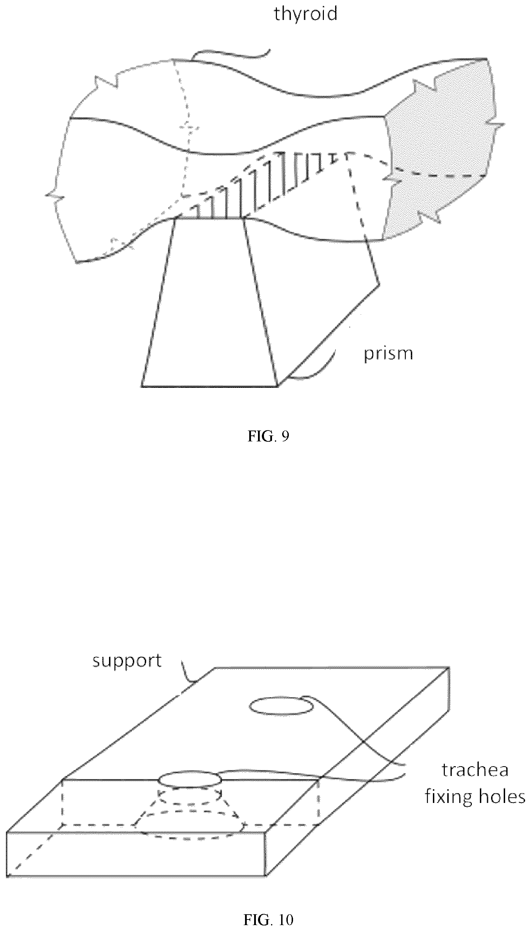

Figure 9 shows an attachment Mechanism of the Thyroid's Model to Trachea. Figure 9 shows a diagrammatic view of a thyroid model representing part of the medical simulator. The model is positioned on a prism of attachment, indicating how it is secured prior to insertion. Different sections of the thyroid are labeled, illustrating its configuration within the simulator.

Figure 10 shows a medical Simulator Support Structural View. Figure 10 shows the support plate designed to hold the thyroid model with features like trachea fixing holes for secure attachment. The structure is constructed to support the simulated thyroid model and accompanying simulated tissues. The support plate is made of eco-designed materials to ensure environmental sustainability, with dedicated regions for positioning the thyroid and trachea securely.

There is disclosed a medical simulator comprising an imaging system (or apparatus, or article, or article of manufacture, or assembly, or circuit, or computer program product, or data structure, or device, or machine, or material, or medical device, or memory, or object, or product, or user interface) and a fluorescent thyroid model for surgical training.

The present document is not a medical advice, nor a legal advice.

The invention can take form of an entirely hardware embodiment, an entirely software embodiment or an embodiment containing both hardware and software elements. **In** a preferred embodiment, the invention is implemented in software, which includes but is not limited to firmware, resident software, microcode, etc. Furthermore, the invention can take the form of a computer program product accessible from a computer-usable or computer-readable medium providing program code for use by or in connection with a computer or any instruction execution system. For the purposes of this description, a computer-usable or computer-readable can be any apparatus that can contain, store, communicate, propagate, or transport the program for use by or in connection with the instruction execution system, apparatus, or device.

"A and/or B means": "A", "B"", and "A and B"

## Claims

1. A medical simulator system (100) comprising an imaging system (110) and a fluorescent thyroid model (120) for surgical training.

2. The medical simulator system of claim 1, wherein the thyroid model (120) comprises attached fluorescent parathyroid glands and veins.

3. The medical simulator system of claim 2, wherein fluorescent properties are obtained using a cyanine dye (130) mixed with hydrous magnesium phyllosilicate in a silicone matrix.

4. The medical simulator system of claim 3, wherein the mixture is stabilized with an aqueous solution of bovine serum albumin.

5. The medical simulator system of claim 3, wherein the mixture comprises cyanine dye, albumine (130), hydrous magnesium phyllosilicate, with water and/or ethanol and/or methanol.

6. The medical simulator system of claim 1, wherein the thyroid model (120) is attached to a trachea using a silicone lock mechanism, for example comprising a concave button and a convex hole configuration.

7. The medical simulator system of any preceding claim, wherein the imaging system (110) is one or more of optical biopsy system based on fluorescence, a Widefield Fluorescence Microscope, a Confocal Fluorescence Microscope, a Multiphoton Microscope or a Light Sheet Fluorescence Microscope.

8. The medical simulator system of claim 3, wherein cyanine dye (130) concentration is optimized to balance fluorescence intensity and duration of visibility.

9. The medical simulator system of claim 1, wherein the medical simulator (100) comprises one or more built-in light sources to simulate Near Infra-Red excitation light for fluorescence activation.

10. The medical simulator system of any preceding claim, further comprising one or more augmented reality devices and/or virtual reality devices configured to display surgery gestures and/or track surgical tools movements and/or provide haptic feedback to simulate the tactile sensation of surgical procedures and/or allow for collaborative training sessions or remote expert guidance.

11. The medical simulator system of any preceding claim, further comprising one or more sensors for detecting the position and/or movement of surgical tools operating on the thyroid model (120).

12. The medical simulator system of any preceding claim, further comprising one or more actuators.

13. The medical simulator system of any preceding claim, further comprising one or more artificial intelligence models implemented in software programs or hardware circuits configured to guide surgery.

14. The medical simulator system of any preceding claim, wherein the thyroid model (120) is obtained by additive manufacturing according to the customized anatomy of a given patient determined by medical imaging and/or determined by artificial intelligence.

15. The medical simulator system of claim 1, arranged on a support structure made of biodegradable, and/or recyclable and/or renewable and/or eco-designed materials.
